# EUROPEAN PATENT APPLICATION

(11) **EP 2 664 743 A1**
(43) Date of publication of application: **20.11.2013**
(21) Application number: 12290168.9
(22) Date of filing: 16.05.2012
(51) Int. Cl.: E21B 47/12

(54) **Downhole information storage and transmission**

(71) Applicant: Services Pétroliers Schlumberger, 75007 Paris (FR); Schlumberger Technology B.V., 2514 JG The Hague (NL); Schlumberger Holdings Limited (SHL), Tortola (VG); PRAD Research and Development Limited, Road Town, Tortola BV1 (VG)
(72) Inventor: Hassan, Khaldon, 92140 Clamart (FR); Beneteau, Lionel, 92160 Antony (FR)
(74) Representative: Rzaniak, Martin

(57) **Abstract**

Apparatus and methods for downhole information storage and transmission are disclosed herein. An example method disclosed herein includes losslessly compressing at least a portion of information received from a portion of a downhole tool disposed in a wellbore. The information is compressed via a processor disposed on the downhole tool and communicatively coupled to the portion of the downhole tool. The example method further includes transmitting at least a portion of the compressed information to a receiver disposed at or near a surface of Earth.

## Description

### Background of the Disclosure

To evaluate a subterranean formation, a downhole tool may be lowered into a wellbore or borehole penetrating the subterranean formation to measure one or more characteristics or parameters of the subterranean formation such as, for example, formation fluid properties, wellbore pressures, formation porosity, etc. To acquire data, one or more sensors are disposed in the wellbore (e.g., on a casing adjacent the formation, on the downhole tool, etc.).

### Summary

This summary is provided to introduce a selection of concepts that are further described below in the detailed description. This summary is not intended to identify key or essential features of the claimed subject matter, nor is it intended to be used as an aid in limiting the scope of the claimed subject matter.

An example method disclosed herein includes losslessly compressing information received from a portion of a downhole tool disposed in a wellbore. The information is losslessly compressed via a processor disposed on the downhole tool and communicatively coupled to the portion of the downhole tool. The example method further includes transmitting the compressed information to a receiver disposed at or near a surface of Earth.

Another example method disclosed herein includes losslessly compressing information provided by an information acquiring device disposed in a wellbore. The information is losslessly compressed via a processor disposed on a downhole tool communicatively coupled to the information acquiring device. The example method further includes storing the compressed information via an information storage device including nonvolatile memory. The example information storage device is disposed on the downhole tool.

An example tangible article of manufacture disclosed herein stores example machine readable instructions which, when executed, cause a machine to losslessly compress information via a processor disposed on a downhole tool. The example information is acquired in a wellbore. The example machine readable instructions, when executed, also cause the machine to transmit a portion of the compressed information from the downhol tool to a receiver disposed at or near a surface of Earth. The example machine is to consume less power relative to a transmission of the information from the downhole tool to the receiver without compressing the information.

### Brief Description of the Drawings

The present disclosure is best understood from the following detailed description when read with the accompanying figures. It is emphasized that, in accordance with the standard practice in the industry, various features are not drawn to scale. In fact, the dimensions of the various features may be arbitrarily increased or reduced for clarity of discussion.

FIG. 1 illustrates an example system in which embodiments of apparatus and methods for downhole information storage and transmission can be implemented.

FIG. 2 illustrates another example system in which embodiments of example apparatus and methods for downhole information storage and transmission can be implemented.

FIG. 3 illustrates various components of an example device that can implement embodiments of apparatus and methods for downhole information storage and transmission.

FIG. 4 illustrates example method(s) for downhole information storage and transmission in accordance with one or more embodiments.

### Detailed Description

It is to be understood that the following disclosure provides many different embodiments or examples for implementing different features of various embodiments. Specific examples of components and arrangements are described below to simplify the present disclosure. These are, of course, merely examples and are not intended to be limiting. In addition, the present disclosure may repeat reference numerals and/or letters in the various examples. This repetition is for the purpose of simplicity and clarity and does not in itself dictate a relationship between the various embodiments and/or configurations discussed. Moreover, the formation of a first feature over or on a second feature in the description that follows may include embodiments in which the first and second features are formed in direct contact, and may also include embodiments in which additional features may be formed interposing the first and second features such that the first and second features may not be in direct contact.

One or more aspects of the present disclosure relate to methods and apparatus for downhole information storage and transmission. A downhole tool may be communicatively coupled to an information acquiring device such as, for example, a gauge disposed in a wellbore. The information acquiring device may acquire information relating to the wellbore, formation fluid, a subterranean formation adjacent the wellbore, and/or other information. The downhole tool may include an information storage device to store the information and/or a transmitter to transmit the information to a receiver at a surface of the earth.

Example methods disclosed herein may include losslessly compressing at least a portion of information received from a portion of the downhole tool via a processor disposed on the downhole tool and communicatively coupled to the portion of the downhole tool. In some examples, at least a portion of the information received from the portion of the downhole tool is acquired via the gauge. The example methods may further include transmitting at least a portion of the compressed information to the receiver. In some examples, losslessly compressing the information via the processor and transmitting the compressed information to the receiver may consume less power relative to a transmission of the information to the receiver without compressing the information. The compressed information may be transmitted to the receiver by transmitting acoustic signals via a repeater. The example methods may further include storing at least a portion of the compressed information via the information storage device disposed on the downhole tool.

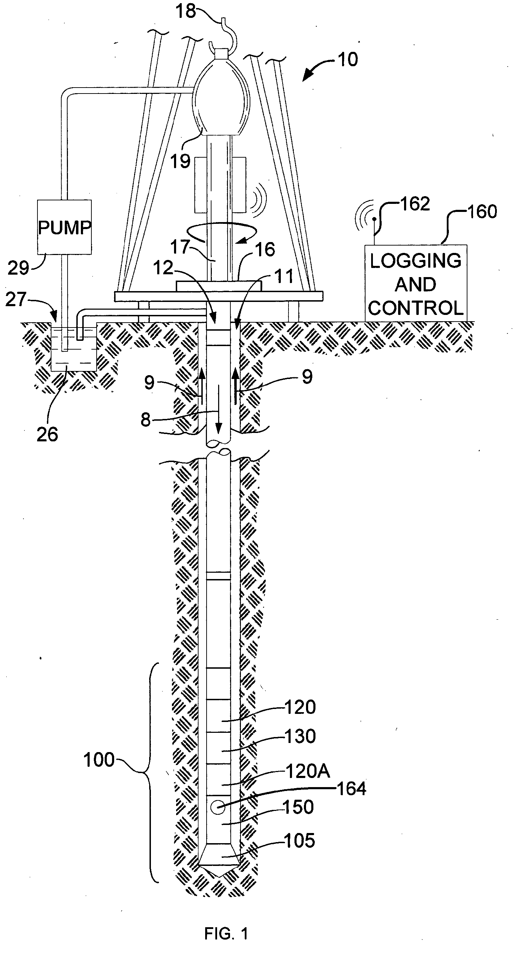

FIG. 1 illustrates a wellsite system in which the present invention can be employed. The wellsite can be onshore or offshore. In this example system, a borehole 11 is formed in subsurface formations by rotary drilling in a manner that is well known. Embodiments of the invention can also use directional drilling, as will be described hereinafter.

A drill string 12 is suspended within the borehole 11 and has a bottom hole assembly 100 which includes a drill bit 105 at its lower end. The surface system includes platform and derrick assembly 10 positioned over the borehole or wellbore 11, the assembly 10 including a rotary table 16, kelly 17, hook 18 and rotary swivel 19. The drill string 12 is rotated by the rotary table 16, energized by means not shown, which engages the kelly 17 at the upper end of the drill string 12. The drill string 12 is suspended from the hook 18, attached to a traveling block (also not shown), through the kelly 17 and the rotary swivel 19, which permits rotation of the drill string 12 relative to the hook 18. As is well known, a top drive system could be used.

In the example of this embodiment, the surface system further includes drilling fluid or mud 26 stored in a pit 27 formed at the well site. A pump 29 delivers the drilling fluid 26 to the interior of the drill string 12 via a port in the swivel 19, causing the drilling fluid 26 to flow downwardly through the drill string 12 as indicated by the directional arrow 8. The drilling fluid 26 exits the drill string 12 via ports in the drill bit 105, and then circulates upwardly through the annulus region between the outside of the drill string 12 and the wall of the borehole 11, as indicated by the directional arrows 9. In this well-known manner, the drilling fluid 26 lubricates the drill bit 105 and carries formation cuttings up to the surface as it is returned to the pit 27 for recirculation.

The bottom hole assembly 100 of the illustrated embodiment includes a logging-while-drilling (LWD) module 120, one or more measuring-while-drilling (MWD) module 130, a roto-steerable system and motor, and drill bit 105.

The LWD module 120 is housed in a special type of drill collar, as is known in the art, and can contain one or a plurality of known types of logging tools. It will also be understood that more than one LWD and/or MWD module can be employed, e.g. as represented at 120A. References throughout to a module at the position of 120 can mean a module at the position of 120A as well. The LWD module includes capabilities for measuring (e.g., information acquiring devices), processing, and storing information (e.g., an information storage device such as, for example, nonvolatile memory), as well as for communicating with the surface equipment. In the present embodiment, the LWD module includes a sonic measuring device and/or a sampling-while-drilling logging device of a type described in U.S. Patent 7,114,562, incorporated herein by reference herein in its entirety.

The MWD module 130 is also housed in a special type of drill collar, as is known in the art, and can contain one or more devices for measuring characteristics of the drill string 12 and drill bit 105. The MWD tool further includes an apparatus (not shown) for generating electrical power to the downhole system. This may include a mud turbine generator powered by the flow of the drilling fluid, it being understood that other power and/or battery systems may be employed. In the present embodiment, the MWD module includes one or more of the following types of measuring devices: a weight-on-bit measuring device, a torque measuring device, a vibration measuring device, a shock measuring device, a stick slip measuring device, a direction measuring device, and an inclination measuring device.

The example wellsite system of FIG. 1 also includes a logging and control unit 160 communicatively coupled to the LWD module 120/120A, the MWD module 130, and a telemetry tool 150. In the illustrated example, the logging and control unit 160 transmits commands and/or instructions to the telemetry tool 150, and the telemetry tool 150 transmits information acquired via the information acquiring devices (e.g., gauges) of the LWD module 120/120A and/or the MWD module 130 to the logging and control unit 160 via the drilling fluid 26. In some examples, a pressure of the drilling fluid 26 in the borehole 11 and/or the drill string 12 is modulated to generate signals including the information, and the example logging and control unit 160 and the example telemetry tool 150 each include a receiver 162, 164 to receive the signals. As described in greater detail below, the example telemetry tool 150 includes a processor to losslessly compress the information acquired via the information acquiring device of the LWD module 120/120A and/or the MDW module 130 and an information storage device to store the compressed information.

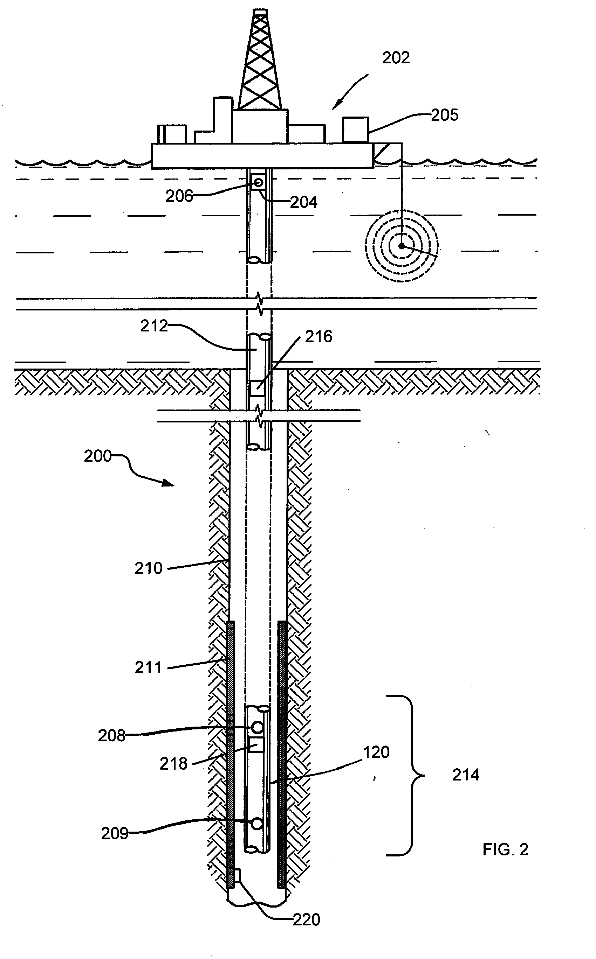

FIG. 2 illustrates another wellsite system in which the example apparatus and methods disclosed herein may be employed. FIG. 2 illustrates a sonic tool 200, which can include a tool of the type described in U.S. Patent No. 6,308,137, incorporated herein by reference in its entirety. In the illustrated example, as shown in FIG. 2, an offshore rig 202 is employed, and a transmitting source or array 204 is deployed near the surface of the water. Any other suitable type of uphole or downhole source or transmitter can be provided. An uphole processor 205 controls the firing of the transmitting source 204. The uphole equipment includes at least one acoustic receiver 206 and a recorder for capturing reference signals near the source 204. The uphole equipment further includes telemetry equipment for receiving signals including information from the downhole equipment. The telemetry equipment and the recorder are coupled to a processor such as, for example, the example processor 205, so that recordings may be synchronized using uphole and downhole clocks. The downhole module 120 includes at least acoustic receivers 208 and 209, which are coupled to a signal processor so that recordings may be made of signals detected by the receivers 208 and 209 in synchronization with the firing of the signal source 204. In the illustrated example, the downhole module 120 is disposed in a wellbore 210. The example wellbore 210 of FIG. 2 includes a casing 211 (e.g., a pipe) to support the wellbore 210.

The example downhole tool 200 of FIG. 2 includes a pipe 212 and a downhole telemetry tool 214. The example downhole telemetry tool 214 is communicatively coupled toa plurality of repeaters 216 and 218 disposed along the pipe 212. In some examples, the pipe 212 includes one of the repeaters 216 and 218 for each length of pipe of about 300 meters. For example, if the pipe 212 is 9,000 meters long, the pipe may include about 30 repeaters. The above-noted distances are merely examples and, thus, other distances may be used without departing from the scope of this disclosure. The example repeaters 216 and 218 of FIG. 2 each include an acoustic receiver (e.g., a piezoelectric sensor), an amplifier (e.g., a class-D amplifier) and a transmitter (e.g., a piezoelectric speaker). The example repeaters 216 and 218 of FIG. 2 transmit acoustic signals from the downhole telemetry tool 214 to the receiver 206 and from the source 204 to the downhole telemetry tool 214.

In the illustrated example of FIG. 2, the downhole tool 200 is communicatively coupled to an information acquiring device 220 such as, for example, a gauge coupled to the casing 211. The example information acquiring device 220 gathers or acquires information such as, for example, one or more characteristics or parameters of a subterranean formation. In some examples, the downhole tool 200 is communicatively coupled to a plurality of information acquiring devices disposed in the wellbore 210 (e.g., disposed on the downhole tool 200, on the casing 211 of the wellbore 210, etc.). As described in greater detail below, the example downhole telemetry tool 214 losslessly compresses at least a portion of the information acquired by the information acquiring device 220 and transmits the compressed information to the receiver 206 and/or stores the compressed information in the downhole tool 200.

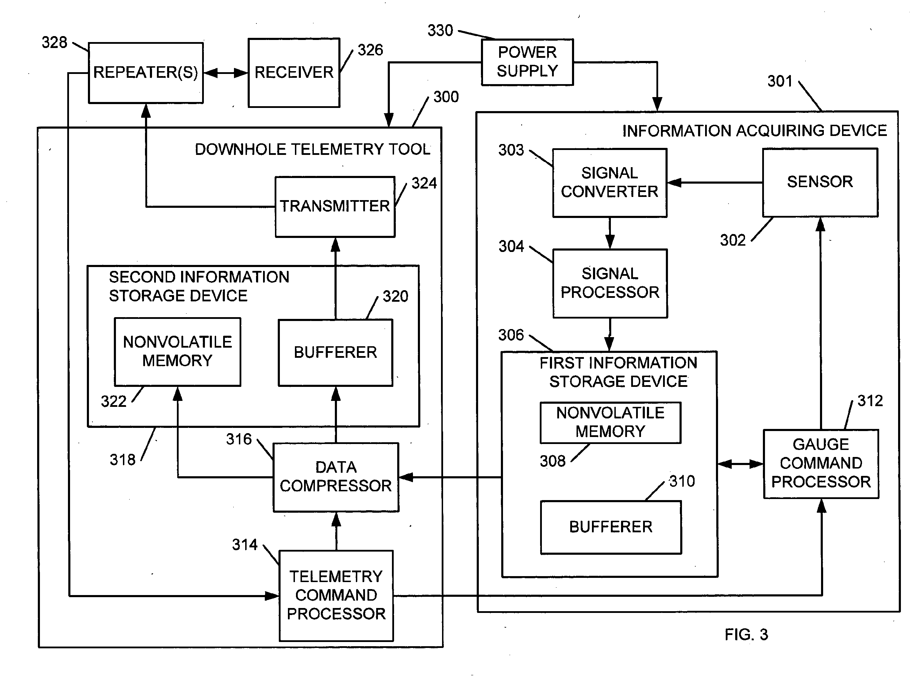

FIG. 3 illustrates an example downhole telemetry tool 300 that may be used to implement the example telemetry tool 150 of FIG. 1 and/or the example telemetry tool 214 of FIG. 2. The example downhole telemetry tool 300 is communicatively coupled to an example information acquiring device 301. In the illustrated example, the information acquiring device 301 is a gauge. In some examples, the information acquiring device 301 is removably coupled to a downhole tool (e.g., the example downhole tool 100 of FIG. 1, the example downhole tool 200 of FIG. 2, etc.) or coupled to a casing (e.g., the example casing 211 of FIG. 2) such that the downhole tool and/or the downhole telemetry tool 300 may be brought to the surface (e.g., to retrieve information stored in the example downhole telemetry tool 300, to perform maintenance on the downhole telemetry tool 300, etc.) while the information acquiring device 301 remains downhole.

The example information acquiring device 301 of FIG. 3 may be used to implement one of the example information acquiring devices of the example MWD module 120/120A, the MWD module 130, and/or other modules of the drill string 12 of FIG. 1; the example information acquiring device 220 of FIG. 2; and/or any other suitable information acquiring device. The example information acquiring device 301 of FIG. 3 includes a sensor 302, a signal converter 303, a signal processor 304, a first information storage device 306 including nonvolatile memory 308 and a bufferer 310, and a gauge command processor 312. During operation of the example information acquiring device 301, the sensor 302 (e.g., a pressure sensor, a temperature sensor, etc.) acquires data or information relating to the wellbore 210 (pressures, temperatures, etc.), formation fluid (e.g., flow rates, viscosity, density, etc.), the subterranean formation (e.g., porosity, permeability, lithology, etc.), and/or other information. The example sensor 302 may generate analog signals, which are converted to digital signals by the example signal converter 303. The example signal processor 304 filters signals, which include the information, to remove noise (e.g., noise from pumps, motors, etc.).

The example first information storage device 306 stores the information. In the illustrated example, the first information storage device 306 includes the nonvolatile memory 308 (e.g., flash memory) and a bufferer 310. The example gauge command processor 312 of FIG. 3 is communicatively coupled to the sensor 302 and the first information storage device 306. The example gauge command processor 312 sends instructions or commands to the sensor 302 to control the acquisition of data or information via the sensor 302 (e.g., when to start or stop acquiring data, a frequency, amount, and/or duration of data acquisition, etc.). The example gauge command processor 312 instructs the example first information storage device 306 to transmit information stored in the nonvolatile memory 308 or buffered by the bufferer 310 to the example downhole telemetry tool 300.

The example downhole telemetry tool 300 of FIG. 3 includes a telemetry command processor 314, a data compressor 316, a second information storage device 318 including a bufferer 320 and nonvolatile memory 322, and a transmitter 324. In the illustrated example, the telemetry command processor 314 is communicatively coupled to a receiver 326 (e.g., the receiver 206 and/or the source 204, etc.) via repeaters 328. In other examples, the telemetry command processor 314 is communicatively coupled to the receiver 326 via drilling mud. In the illustrated example, the telemetry command processor 314 is also communicatively coupled to the gauge command processor 312.

The example telemetry command processor 314 requests information from the information acquiring device 301 (e.g., one data point per minute for ten minutes). In some examples, the telemetry command processor 314 requests a portion of the information stored in the first information storage device 306. In response to the request, the gauge command processor 312 instructs the sensor 302 to acquire the information and/or the gauge command processor 312 instructs the first information storage device 306 to transmit the information to the downhole telemetry tool 300.

When the example downhole telemetry tool 300 receives the information from the information acquiring device 301, the example data compressor 316 (e.g., an ARM Cortex™-M4 processor) losslessly compresses (e.g., using a Samplify Prism 3.0™ algorithm) at least a portion of the information transmitted from the first information storage device 306 to the downhole telemetry tool 300. In some examples, the data compressor 316 losslelssly compresses the information such that a size of the information is decreased by a factor of between about 2 and about 3. In some examples, the data compressor 316 lossily compresses at least a portion of the information received from the first information storage device 306 such that a size of the information is decreased by a factor of between about 1.2 and about 6. In some examples, an amount of compression of the information received from the first information storage device 306 (i.e., a resultant compression ratio) is adjustable via the data compressor 316.

In the illustrated example, the nonvolatile memory 322 (e.g., flash memory) of the second information storage device 318 stores at least a portion of the compressed information. If the example downhole telemetry tool 300 is brought to the surface, the compressed information may be retrieved via the nonvolatile memory 322. In some examples, the second information storage device 318 does not include the nonvolatile memory 322 to store the compressed information.

The example downhole telemetry tool 300 of FIG. 3 transmits at least a portion of the compressed information to the receiver 326. For example, the compressed information is buffered by the data bufferer 320 and sequentially transmitted (e.g., via a bit stream signal) to the example transmitter 324. In some examples, the downhole telemetry tool 300 does not include the data bufferer 320, and the compressed data is transmitted from the data compressor 316 to the example transmitter 324 in real time (i.e., the compressed information is transmitted to the example transmitter 324 without a desired delay). In some examples, the transmitter 324 includes an amplifier (e.g., a class-D amplifier) and a speaker (e.g., a piezoelectric speaker) to transmit the compressed information to the repeaters 328 via acoustic signals. In some examples, the transmitter 324 generates the acoustic signals by vibrating the example pipe 212. In other examples, the transmitter 324 generates signals by modulating pressures of drilling fluid.

In the illustrated example, power is supplied to the information acquiring device 301 and the downhole telemetry tool 300 via a power supply 330 (e.g., one or more battery systems, a mud turbine, etc.). Power consumption of the example downhole telemetry tool 300 is a function of at least an amount of the information compressed by the data compressor 316, an amount of the compressed information stored by the second information storage device 318, and/or an amount of the compressed information transmitted by the transmitter 324 and/or the repeaters 328 from the downhole telemetry tool 300 to the receiver 326. In some examples, losslessly compressing the information via the data compressor 316 and transmitting the compressed information via the transmitter 324 and/or the repeaters 328 consumes less power relative to a transmission of the information to the receiver 326 without compressing the information.

While an example manner of implementing the example telemetry tool 150 of FIG. 1 and the example telemetry tool 214 of FIG. 2 has been illustrated in FIG. 3, one or more of the elements, processes and/or devices illustrated in FIG. 3 may be combined, divided, re-arranged, omitted, and/or implemented in any other way. Further, the example receiver 326, the example repeaters 328, the example power supply 330, the example transmitter 324, the example second information storage device 318 including the bufferer 320 and the nonvolatile memory 322, the example data compressor 316, the example telemetry command processor 314, the example gauge command processor 312, the example first information storage device 306 including the nonvolatile memory 308 and the bufferer 310, the example signal processor 304, the example signal converter 303, the example sensor 302 and/or, more generally, the example downhole telemetry tool 300 and/or the example information acquiring device 301 of FIG. 3 may be implemented by hardware, software, firmware and/or any combination of hardware, software and/or firmware. Thus, for example, any of the example receiver 326, the example repeaters 328, the example power supply 330, the example transmitter 324, the example second information storage device 318 including the bufferer 320 and the nonvolatile memory 322, the example data compressor 316, the example telemetry command processor 314, the example gauge command processor 312, the example first information storage device 306 including the nonvolatile memory 308 and the bufferer 310, the example signal processor 304, the example signal converter 303, the example sensor 302 and/or, more generally, the example downhole telemetry tool 300 and/or the example information acquiring device 301 of FIG. 3 could be implemented by one or more circuit(s), programmable processor(s), application specific integrated circuit(s) (ASIC(s)), programmable logic device(s) (PLD(s)) and/or field programmable logic device(s) (FPLD(s)), etc. When any of the apparatus or system claims of this patent are read to cover a purely software and/or firmware implementation, at least one of the example receiver 326, the example repeaters 328, the example power supply 330, the example transmitter 324, the example second information storage device 318 including the bufferer 320 and the nonvolatile memory 322, the example data compressor 316, the example telemetry command processor 314, the example gauge command processor 312, the example first information storage device 306 including the nonvolatile memory 308 and the bufferer 310, the example signal processor 304, the example signal converter 303, the example sensor 302 and/or, more generally, the example downhole telemetry tool 300 and/or the example information acquiring device 301 of FIG. 3 are hereby expressly defmed to include a tangible computer readable medium such as a memory, DVD, CD, Blu-ray, etc. storing the software and/or firmware. Further still, the example downhole telemetry tool 300 and/or information acquiring device 301 of FIG. 3 may include one or more elements, processes and/or devices in addition to, or instead of, those illustrated in FIG. 3, and/or may include more than one of any of the illustrated elements, processes and devices.

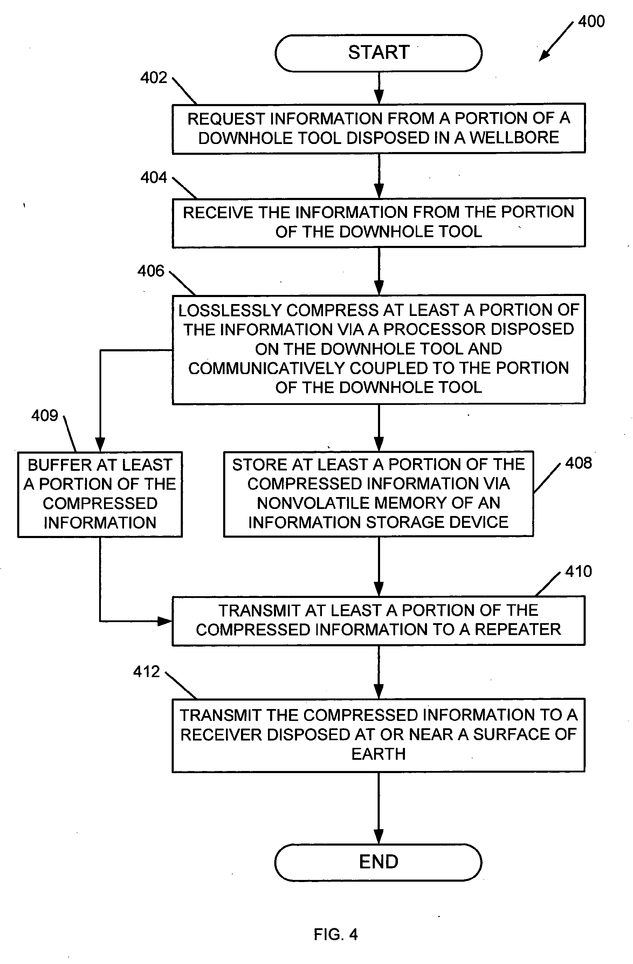

FIG. 4 depicts an example flow diagram representative of processes that may be implemented using, for example, computer readable instructions. The example process of FIG. 4 may be performed using a processor, a controller and/or any other suitable processing device. For example, the example processes of FIG. 4 may be implemented using coded instructions (e.g., computer readable instructions) stored on a tangible computer readable medium such as a flash memory, a read-only memory (ROM), and/or a random-access memory (RAM). As used herein, the term tangible computer readable medium is expressly defmed to include any type of computer readable storage and to exclude propagating signals. The example process of FIG. 4 may be implemented using coded instructions (e.g., computer readable instructions) stored on a non-transitory computer readable medium such as a flash memory, a read-only memory (ROM), a random-access memory (RAM), a cache, or any other storage media in which information is stored for any duration (e.g., for extended time periods, permanently, brief instances, for temporarily buffering, and/or for caching of the information). As used herein, the term non-transitory computer readable medium is expressly defmed to include any type of computer readable medium and to exclude propagating signals.

One or more of the example process of FIG. 4 may be implemented using any combination(s) of application specific integrated circuit(s) (ASIC(s)), programmable logic device(s) (PLD(s)), field programmable logic device(s) (FPLD(s)), field programmable gate array(s) (FPGA(s)), discrete logic, hardware, firmware, etc. Also, one or more operations depicted in FIG. 8 may be implemented manually or as any combination(s) of any of the foregoing techniques, for example, any combination of firmware, software, discrete logic and/or hardware. In some examples, the example process of FIG. 4 may be implemented using the logging and control unit 160 at the surface, the uphole processor 205 and/or a downhole control system. Further, one or more operations depicted in FIG. 4 may be implemented at the surface and/or downhole.

Further, although the example process of FIG. 4 is described with reference to the flow diagram of FIG. 4, other methods of implementing the process of FIG. 4 may be employed. For example, the order of execution of the blocks may be changed, and/or some of the blocks described may be changed, omitted, sub-divided, or combined. Additionally, one or more of the operations depicted in FIG. 4 may be performed sequentially and/or in parallel by, for example, separate processing threads, processors, devices, discrete logic, circuits, etc.

FIG. 4 depicts an example process 400 disclosed herein. The example process begins by a downhole telemetry tool (e.g., the telemetry command processor 314 of the example downhole telemetry tool 300 of FIG. 3) requesting information from a portion of a downhole tool disposed in a wellbore such as, for example, a gauge (e.g., the example information acquiring device 301 of FIG. 3). When the downhole telemetry tool (e.g., the telemetry command processor 314 of the example downhole telemetry tool 300 of FIG. 3) requests the information from the portion of the downhole tool (e.g., by transmitting a command to the gauge command processor 312), the portion of the downhole tool such as, for example, the gauge acquires and/or transmits the requested information to the downhole telemetry tool.

For example, the gauge may be disposed in the downhole tool (e.g., the example downhole tool 100 of FIG. 1, the example downhole tool 200 of FIG. 2, etc.), on a casing (e.g., the example casing 211 of FIG. 2) of the wellbore, and/or any other suitable location in the wellbore. In some examples, the gauge includes a sensor (e.g., the example sensor 302 of Fig. 3), which acquires the information and provides an analog signal including the information and noise. The analog signal is converted to a digital signal via a signal converter (e.g., the example signal converter 303 of FIG. 3). A signal processor (e.g., the signal processor 304 of FIG. 3) filters the information from the noise, and the information is stored in an information storage device (e.g., the example first information storage device 306 of FIG. 3). The information storage device then transmits the information to the downhole telemetry tool.

At block 404, the downhole telemetry tool receives the information from the portion of the downhole tool (e.g., the information acquiring device 301 of FIG. 3) and, at block 406, at least a portion of the information is losslessly compressed via a processor (e.g., the example data compressor 316 of FIG. 3) disposed on the downhole tool and communicatively coupled to the portion of the downhole tool. In some examples, a size of the information is losslessly compressed (e.g., decreased) by a factor of between about 2 and about 3. At block 408, the downhole telemetry tool stores at least a portion of the compressed information via an nonvolatile memory of an information storage device (e.g., the nonvolatile memory 322 of the example second information storage device 318 of FIG. 3). The information storage device is disposed on the downhole tool. To retrieve the compressed information from the nonvolatile memory of the example information storage device, the downhole tool and/or the downhole telemetry tool may be brought to the surface. Some examples downhole telemetry tools do not include nonvolatile memory to store the compressed information, and thus, in such examples, the compressed information is not stored via an information storage device including nonvolatile memory disposed on the downhole tool. At block 409, a bufferer (e.g., the example bufferer 320 of FIG. 3) buffers at least a portion of the compressed information. For example, the compressed information is buffered via random-access memory (RAM), etc.

At block 410, at least a portion of the compressed information is transmitted to a repeater (e.g., the example repeaters 216 and 218 of FIG. 2, the example repeater(s) 328 of FIG. 3, etc.). In some examples, the compressed information buffered via the example bufferer at block 409 is sequentially transmitted to a transmitter (e.g., the example transmitter 324 of FIG. 3), which generates a signal to the repeater. In some examples, the transmitter generates one or more acoustic signals by, for example, vibrating a pipe of the downhole tool. In some examples, the compressed information is transmitted from the processor (e.g., the example data compressor 316) to the transmitter in real time (i.e., without a desired delay). The signals generated by the transmitter propagate toward the surface to the repeater. In other examples, the transmitter modulates pressures of drilling fluid to generate signals including the compressed information. In some such examples, the signals propagate through the drilling fluid to a receiver (e.g., the receiver 162 of FIG. 1) without relaying the signal via a repeater.

In some examples, the compressed information stored in the nonvolatile memory of the information storage device is different than the compressed information transmitted to the repeater and/or the receiver. For example, a portion of the compressed information may be stored in the information storage device and another portion of the compressed information may be transmitted to the repeater and/or the receiver. In some examples, the compressed information stored in the information storage device may include the compressed information transmitted to the repeater and/or the receiver and/or other compressed information. In other examples, the compressed information stored in the information storage device is the same as the compressed information transmitted to the repeater and/or the receiver. Thus, any of the compressed information may be stored in the information storage device and/or transmitted to the repeater and/or the receiver.

At block 412, the repeater transmits the compressed information to a receiver disposed at or near the surface of the Earth (e.g., the example receiver 162 of FIG. 1, the example receiver 206 of FIG. 2, the example receiver 326 of FIG. 3, etc.). In some examples, the downhole tool includes a plurality of repeaters to transmit the compressed information to the receiver. In some examples, losslessly compressing the information via the processor and transmitting the compressed information via the transmitter and/or the repeaters consumes less power relative to a transmission of the information to the receiver without compressing the information. Some example downhole tools do not include the transmitter and/or the example repeater. In some such examples, the compressed information is stored in the nonvolatile memory of the information storage device, and the compressed information is not transmitted to the receiver.

Although only a few example embodiments have been described in detail above, those skilled in the art will readily appreciate that many modifications are possible in the example embodiments without materially departing from fluid filters. Accordingly, such modifications are intended to be included within the scope of this disclosure as defined in the following claims. In the claims, means-plus-function clauses are intended to cover the structures described herein as performing the recited function and not only structural equivalents, but also equivalent structures. Thus, although a nail and a screw may not be structural equivalents in that a nail employs a cylindrical surface to secure wooden parts together, whereas a screw employs a helical surface, in the environment of fastening wooden parts, a nail and a screw may be equivalent structures. It is the express intention of the applicant not to invoke 35 U.S.C. § 112, paragraph 6 for any limitations of any of the claims herein, except for those in which the claim expressly uses the words 'means for' together with an associated function.

The Abstract at the end of this disclosure is provided to comply with 37 C.F.R. § 1.72(b) to allow the reader to quickly ascertain the nature of the technical disclosure. It is submitted with the understanding that it will not be used to interpret or limit the scope or meaning of the claims.

## Claims

1. A method, comprising:
losslessly compressing at least a portion of information received from a portion of a downhole tool disposed in a wellbore via a processor disposed on the downhole tool and communicatively coupled to the portion of the downhole tool (406); and
transmitting at least a portion of the compressed information to a receiver disposed at or near a surface of Earth (412).

2. The method of claim 1 further comprising requesting the information from the portion of the downhole tool.

3. The method of claim 1 wherein losslessly compressing the information via the processor and transmitting the compressed information to the receiver consumes less power relative to a transmission of the information to the receiver without compressing the information.

4. The method of claim 1 wherein losslessly compressing the information comprises losslessly compressing a size of the information by a factor of about 2 to about 3.

5. The method of claim 1 wherein losslessly compressing at least a portion of the information received from the portion of the downhole tool comprises losslessly compressing at least a portion of information acquired via a gauge.

6. The method of claim 1 wherein transmitting the compressed information comprises transmitting the compressed information via a repeater.

7. The method of claim 1 further comprising storing at least a portion of the compressed information via an information storage device disposed on the downhole tool.

8. A tangible article of manufacture storing machine readable instructions which, when executed, cause a machine to at least:
losslessly compress information via a processor disposed on a downhole tool, the information acquired in a wellbore (406); and
transmit at least a portion of the compressed information from the downhole tool to a receiver disposed at or near a surface of Earth, wherein the machine is to consume less power relative to a transmission of the information from the downhole tool to the receiver without compressing the information (412).

9. The tangible article of manufacture of claim 8 wherein the machine readable instructions, when executed, further cause the machine to request the information from a portion of the downhole tool.

10. The tangible article of manufacture of claim 8 wherein the machine readable instructions, when executed, cause the machine to losslessly compress a size of the information by a factor of about 2 to about 3.

11. The tangible article of manufacture of claim 8 wherein at least a portion of the information is acquired via a gauge disposed in the wellbore.

12. The tangible article of manufacture of claim 8 wherein the machine readable instructions, when executed, cause the machine to transmit the compressed information via a repeater.

13. The tangible article of manufacture of claim 8 wherein the machine readable instructions, when executed, further cause the machine to store at least a portion of the compressed information via an information storage device including nonvolatile memory disposed on the downhole tool.

14. The tangible article of manufacture of claim 13 wherein the portion of the compressed information stored via the information storage device includes the compressed information transmitted to the receiver and other compressed information.
